# EUROPEAN PATENT SPECIFICATION

(11) **EP 4 443 166 B1**
(45) Date of publication and mention of the grant of the patent: **09.12.2026**
(21) Application number: 22900962.6
(22) Date of filing: 24.10.2022
(51) Int. Cl.: G01N 35/10, G03B 17/56, H04N 23/51, H04N 23/57

(54) **CAMERA HOLDING DEVICE FOR AUTOMATIC ANALYSIS APPARATUS**
KAMERAHALTEVORRICHTUNG FÜR AUTOMATISCHES ANALYSEGERÄT
DISPOSITIF DE MAINTIEN DE CAMÉRA POUR APPAREIL D'ANALYSE AUTOMATIQUE

(30) Priority: 02.12.2021 JP 2021196149
(43) Date of publication of application: 09.10.2024
(73) Proprietor: Hitachi High-Tech Corporation, Minato-ku Tokyo 105-6409 (JP)
(72) Inventor: OCHI, Manabu, 100-8280 Tokyo (JP); ETOH, Jun, 100-8280 Tokyo (JP); SAKATA, Kenshiro, 105-6409 Tokyo (JP); SUZUKI, Yoichiro, 105-6409 Tokyo (JP); KAWAHARA, Tetsuji, 105-6409 Tokyo (JP)
(74) Representative: Strehl & Partner mbB
(86) International application number: PCT/JP2022/039474
(87) International publication number: WO 2023/100529

(56) References cited:
- JP-A- 2002 350 970
- JP-A- 2002 350 970
- JP-A- 2006 071 451
- JP-A- 2006 071 451
- JP-A- 2008 175 791
- JP-A- 2008 175 791
- JP-A- 2010 175 420
- JP-A- 2010 175 420
- JP-A- 2017 151 002
- JP-A- 2017 151 002
- JP-A- 2019 000 961
- JP-A- 2019 000 961
- US-A1- 2008 006 653
- US-A1- 2008 006 653
- US-A1- 2010 021 348

## Description

### Technical Field

The present invention relates to a camera holding device for an automatic analysis apparatus.

### Background Art

In an automatic analysis apparatus that performs component analysis by mixing a specimen such as serum or urine with a reagent, it is necessary to insert the tips of nozzles into a plurality of narrow spaces such as a specimen container, a reagent container, and a cleaning hole at the time of pipetting the specimen and the reagent. The nozzle used for pipetting the specimen or the reagent in the automatic analysis apparatus is periodically replaced from the viewpoint of maintaining the pipetting accuracy. Then, every time the nozzle is replaced, the number of driving pulses of a stepping motor that moves a pipetting arm needs to be adjusted so that the tip position of the nozzle coincides with the target stop position of the specimen container, the reagent container, the cleaning hole, or the like.

An example of a technique for facilitating this adjustment work is disclosed in PTL 1. The technique described in PTL 1 is to install a camera at the tip of an arm part (pipetting arm) of a moving mechanism that moves a pipette (nozzle) and capture an image of the tip of the nozzle and a target stop position. PTL 2 discloses another camera holding device.

### Citation List

### Patent Literature

PTL 1: JP 2012-32310 A
PTL 2: US 2010/021348 A1.

### Summary of Invention

### Technical Problem

In the technique described in PTL 1, when pipetting mechanisms for a specimen and a reagent constituting the automatic analysis apparatus have different nozzle lengths, it has been necessary to use a plurality of single-focus lenses having different focal lengths, use a large and heavy zoom lens, and individually adjust a mounting angle on the pipetting arm.

An object of the present invention is to provide a camera holding device for an automatic analysis apparatus that facilitates adjustment of tip positions of pipetting nozzles having different lengths, even with the use of a single single-focus camera.

### Solution to Problem

The present invention is a camera holding device for an automatic analysis apparatus, which holds a camera to capture an image of the tip of a pipetting nozzle of the automatic analysis apparatus on a pipetting arm that moves the pipetting nozzle through rotational movement, the camera holding device including: an expansion/contraction part that expands and contracts in a vertical direction with respect to the pipetting arm; an arm-side fixing part that fixes one end of the expansion/contraction part to the pipetting arm; and a camera-side fixing part that fixes the camera to the other end of the expansion/contraction part.

### Advantageous Effects of Invention

According to the present invention, it is possible to provide a camera holding device for an automatic analysis apparatus, capable of easily adjusting tip positions of pipetting nozzles having different lengths, even with the use of a single single-focus camera.

### Brief Description of Drawings

[FIG. 1] FIG. 1 is a schematic configuration diagram of an automatic analysis apparatus.
[FIG. 2] FIG 2 is a side view of a pipetting mechanism.
[FIG. 3] FIG 3 is a side view of a camera holding device according to a first embodiment.
[FIG. 4] FIG 4 is a side view illustrating the state of the camera holding device when a camera is mounted on a pipetting arm in the first embodiment.
[FIG. 5] FIG 5 is a side view of a third pipetting mechanism and a camera holding device illustrating a second embodiment.
[FIG. 6] FIG 6 is a side view of a camera holding device according to a third embodiment.
[FIG. 7] FIG 7 is a side view illustrating the state of the camera holding device when a camera is mounted on a pipetting arm in the third embodiment.
[FIG. 8] FIG 8 is a side view of a camera holding device according to a fourth embodiment.
[FIG. 9] FIG 9 is a side view illustrating the state of the camera holding device when a camera is mounted on a pipetting arm in the fourth embodiment.
[FIG. 10] FIG 10 is a plan view illustrating a bottom surface of a pipetting arm in a fifth embodiment.
[FIG. 11] FIG 11 is a view illustrating a relative position of a central axis (A3) of an expansion/contraction part with respect to a screw hole (A1) of a reagent pipetting arm and a screw hole (A2) of a specimen pipetting arm.
[FIG. 12] FIG 12 is a plan view of a camera holding device according to the fifth embodiment as viewed from above.
[FIG. 13] FIG 13 is a side view illustrating the state of the camera holding device when a camera is mounted on a pipetting arm in the fifth embodiment.

### Description of Embodiments

Hereinafter, embodiments of the present invention will be described in detail with reference to the drawings.

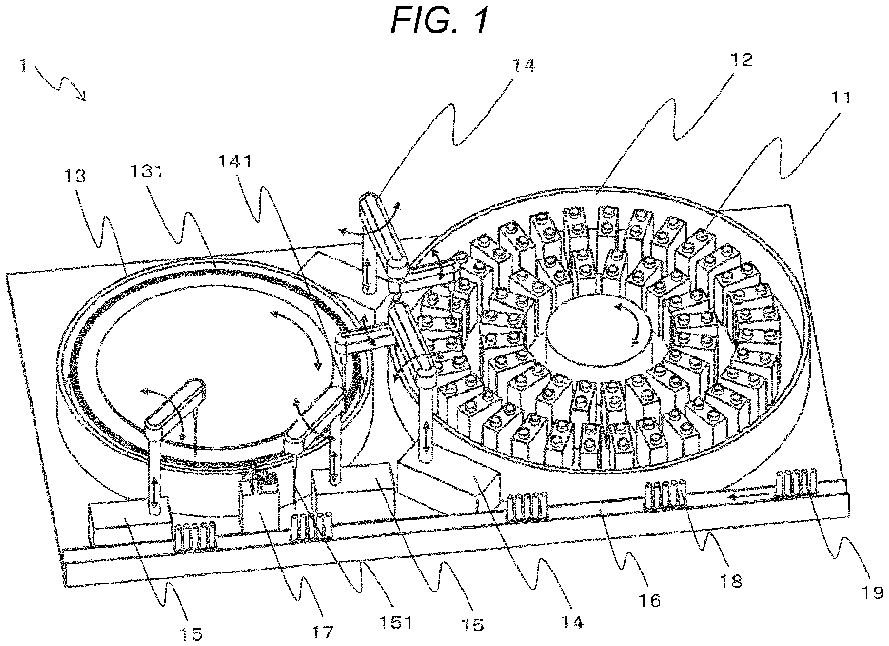

FIG. 1 is a schematic configuration diagram of an automatic analysis apparatus 1. The automatic analysis apparatus 1 includes: a reagent disk 12 on which a reagent container 11 is placed, a reaction disk 13 that mixes and reacting a reagent and a specimen; a reagent pipetting mechanism 14 that aspirates or dispenses the reagent; and a specimen pipetting mechanism 15 that aspirates or dispenses the specimen. The reagent pipetting mechanism 14 includes a reagent pipetting nozzle 141 (first pipetting nozzle) for pipetting a reagent, and the specimen pipetting mechanism 15 includes a specimen pipetting nozzle 151 (second pipetting nozzle) for pipetting a specimen.

The specimen charged into the automatic analysis apparatus 1 is placed on a rack 19 and conveyed on a conveyance line 16 while contained in a specimen container 18. A plurality of specimen containers 18 can be placed on the rack 19. Examples of the specimen include blood such as serum and whole blood, and urine. Reaction cells 131 for mixing the reagent and the specimen are provided side by side on the outer periphery of the reaction disk 13, and move by rotating the reaction disk 13.

The reagent pipetting mechanism 14 moves the reagent pipetting nozzle 141 to a stop position for aspirating the reagent from the reagent container 11, a stop position for dispensing the reagent into the reaction cell 131, and a stop position for washing away the reagent attached to the reagent pipetting nozzle 141 in a cleaning tank (not illustrated). Similarly, the specimen pipetting mechanism 15 moves the specimen pipetting nozzle 151 to a stop position for aspirating the specimen from the specimen container 18, a stop position for dispensing the specimen into the reaction cell 131, and a stop position for washing away the specimen attached to the tip of the specimen pipetting nozzle 151 in a cleaning tank 17. In addition, the reagent pipetting mechanism 14 and the specimen pipetting mechanism 15 move up and down the reagent pipetting nozzle 141 and the specimen pipetting nozzle 151 in accordance with the height of each stop position.

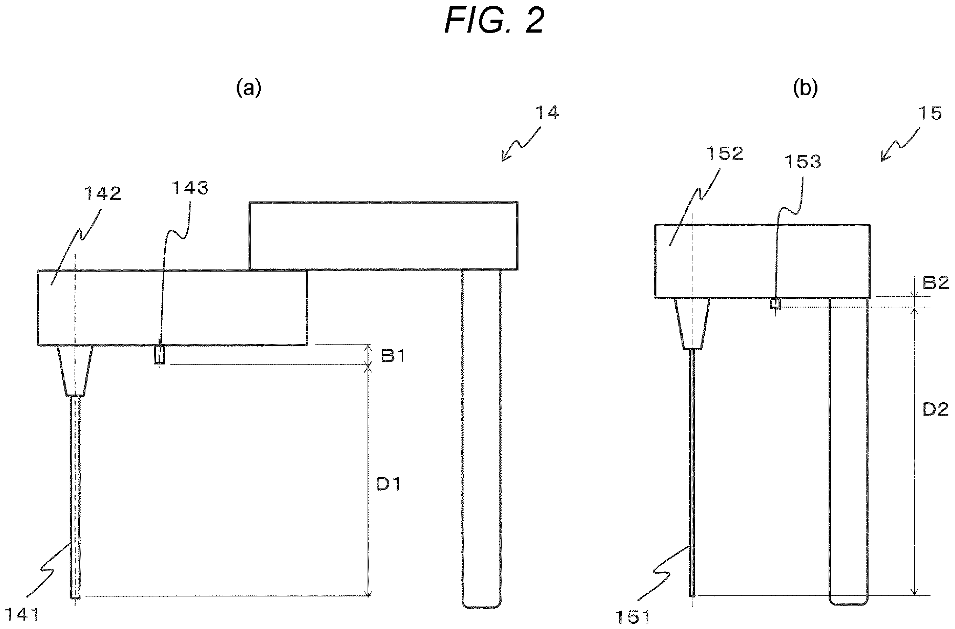

FIG. 2 is a side view of the pipetting mechanism, in which (a) illustrates a reagent pipetting arm 142, and (b) illustrates a specimen pipetting arm 152. The reagent pipetting nozzle 141 and the specimen pipetting nozzle 151 have different diameters and lengths depending on the difference in the depth and the pipetting amount of a container for performing aspiration and dispensing. Generally, as illustrated in FIG. 2, the reagent pipetting nozzle 141 is shorter and the specimen pipetting nozzle 151 is longer.

A first mounting member 143 is mounted on the bottom surface of the reagent pipetting arm 142 to protrude from the bottom surface, and a second mounting member 153 is also mounted on the bottom surface of the specimen pipetting arm 152 to protrude from the bottom surface. D1, as shown in FIG. 2(a), is a height from the tip (lower end) of the reagent pipetting nozzle 141 to the tip (lower end) of the first mounting member 143. D2, as shown in FIG. 2(b), is a height from the tip (lower end) of the specimen pipetting nozzle 151 to the tip (lower end) of the second mounting member 153.

### First Embodiment

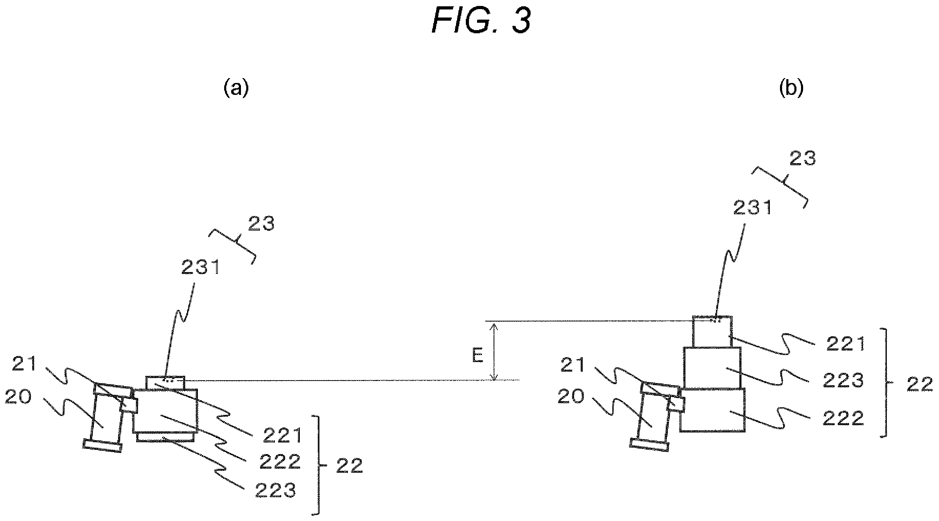

FIG. 3 is a side view of a camera holding device 2 according to a first embodiment, in which (a) illustrates a state where an expansion/contraction part 22 is most contracted (shortest), and (b) illustrates a state where the expansion/contraction part 22 is most expanded (longest). The camera holding device 2 holds a camera 20 that captures an image of the tip of the reagent pipetting nozzle 141 or the specimen pipetting nozzle 151. As illustrated in FIG. 3, the camera holding device 2 of the present embodiment includes: an expansion/contraction part 22 that expands/contracts in the vertical direction (the lifting/lowering direction of the pipetting nozzle) with respect to each pipetting arm; an arm-side fixing part 23 that fixes one end of the expansion/contraction part 22 to each pipetting arm; and a camera-side fixing part 21 that fixes the camera 20 to the other end of the expansion/contraction part 22.

The expansion/contraction part 22 includes three cylinders having different diameters, that is, an innermost cylinder 221, an outermost cylinder 222, and an intermediate cylinder 223. A plurality of elastically supported projection members (not illustrated) protrude from the inner peripheral surface of the outermost cylinder 222 disposed most outwardly and the outer peripheral surface of the innermost cylinder 221 disposed most inwardly. On the outer peripheral surface and the inner peripheral surface of the intermediate cylinder 223 disposed between the innermost cylinder 221 and the outermost cylinder 222, a plurality of grooves with the deepest ends are formed. Fitting the projection member and the groove connects the cylinders in a state that allows relative movement in the axial and circumferential directions. The innermost cylinder 221 is pushed and pulled while being rotated, so that the protruding member moves along the groove engraved in the intermediate cylinder 223 and falls into the deepest portion of the groove, thereby fixing the cylinders to each other. With this configuration, the length of the expansion/contraction part 22 can be adjusted in two stages. E, as shown in FIG. 3, is the expansion/contraction amount (the difference between the shortest state and the longest state) of the expansion/contraction part 22 of the camera holding device 2.

The arm-side fixing part 23 includes a hole 231 provided in one end (upper end) surface of the innermost cylinder 221, and the hole 231 is fitted over the first mounting member 143 and the second mounting member 153 illustrated in FIG. 2, thereby positioning and fixing the camera holding device 2 to the reagent pipetting arm 142 and the specimen pipetting arm 152. The camera-side fixing part 21 is provided on the side surface of the outermost cylinder 222.

A feature of the present embodiment is that an expansion/contraction amount E of the expansion/contraction part 22 is set equal to a value D2 - D1, where D2 and D1 are shown in FIG. 2(b) and FIG. 2(a), respectively, with D2 - D1 obtained by subtracting D1 from D2. Here, "equal" means that the expansion/contraction amount E and D2 - D1 do not need to be exactly the same value, and it is sufficient if the difference is within the depth of field of the camera 20.

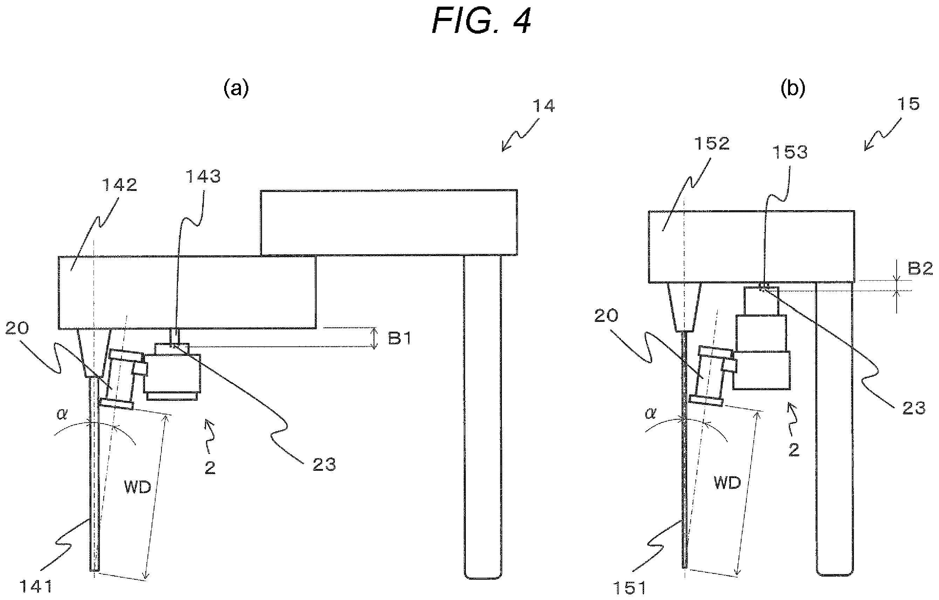

FIG. 4 is a side view illustrating the state of the camera holding device 2 when the camera 20 is mounted on the pipetting arm in the first embodiment, in which (a) illustrates a state when the camera is mounted on the reagent pipetting arm 142, and (b) illustrates a state when the camera is mounted on the specimen pipetting arm 152. As illustrated in FIG. 4, the camera 20 that captures an image of the tip of the reagent pipetting nozzle 141 is held by the reagent pipetting arm 142 with the expansion/contraction part 22 is the shortest state, and the camera 20 that captures an image of the tip of the specimen pipetting nozzle 151 is held by the specimen pipetting arm 152 with where the expansion/contraction part 22 is the longest. At this time, a distance WD and an angle α between the tip of the reagent pipetting nozzle 141 and the camera 20 in FIG. 4(a) have the same values as a distance WD and an angle α between the tip of the specimen pipetting nozzle 151 and the camera 20 in FIG. 4(b). Therefore, since there are no changes in the focus, composition, and angle of the camera 20 with respect to the tip of each nozzle and the pixel resolution with respect to the nozzle, the tip positions of the nozzles of all the pipetting mechanisms can be adjusted with a single single-focus camera even in an automatic analysis apparatus configured with pipetting nozzles having different lengths.

In the present embodiment, the mounting member has been described as a component different from the camera holding device 2, but may be regarded as a component of the camera holding device 2.

### Second Embodiment

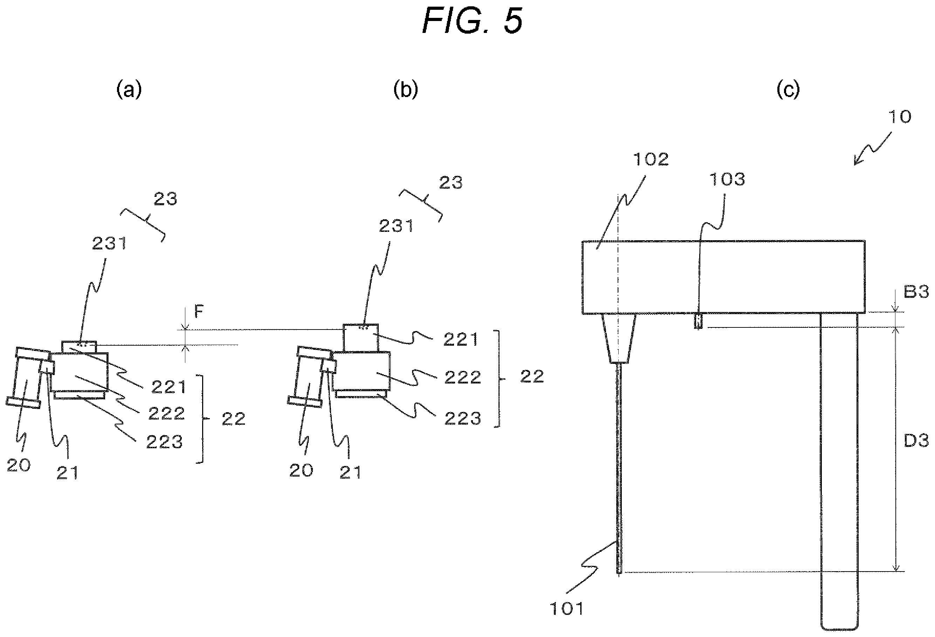

FIG 5 is a side view of a third pipetting mechanism and a camera holding device 2 illustrating a second embodiment. In FIG. 5, parts having the same functions as those of the first embodiment are denoted by the same reference numerals, and the description thereof will be omitted. In the second embodiment, unlike the first embodiment, the automatic analysis apparatus further includes a third pipetting nozzle 101 in addition to the reagent pipetting nozzle 141 (first pipetting nozzle) and the specimen pipetting nozzle 151 (second pipetting nozzle). The third pipetting nozzle 101 is longer than the reagent pipetting nozzle 141 and shorter than the specimen pipetting nozzle 151, and moves through the rotational movement of a third pipetting arm 102. Note that the third pipetting nozzle 101 may be, for example, a nozzle that pipets a reagent, which differs from the reagent pipetted by the reagent pipetting nozzle 141, from the reagent disk 12 of the same automatic analysis apparatus, or may be a nozzle that pipets a reagent or a specimen for another inspection item from a unit adjacent to the automatic analysis apparatus.

A first feature of the present embodiment is that a third mounting member 103 protruding downward from the bottom surface of the third pipetting arm 102 is provided as illustrated in FIG. 5(c). The hole 231 of the arm-side fixing part 23 is fitted over the third mounting member 103, thereby positioning and fixing the camera holding device 2 to the third pipetting arm 102.

A second feature of the present embodiment is that the pressure between the intermediate cylinder 223 and the innermost cylinder 221 is set lower than the pressure between the intermediate cylinder 223 and the outermost cylinder 222. In this case, when the innermost cylinder 221 is pulled while being rotated in the state of FIG. 5(a), the cylinders are fixed to each other even in a state where only the innermost cylinder 221 is expanded (with an expansion amount F) as illustrated in FIG. 5(b). That is, the expansion/contraction part 22 of the present embodiment can be fixed at an intermediate length, in addition to the lengths of the two stages described above, thereby enabling the length to be adjusted to a total of three levels.

Therefore, in the present embodiment, when the expansion/contraction part 22 is in the state of the expansion amount F, the camera 20 that captures an image of the tip of the third pipetting nozzle 101 is held by fitting the hole 231 on the upper surface of the innermost cylinder 221 over the third mounting member 103. The expansion amount F is the maximum value of the relative expansion amount of the innermost cylinder 221 with respect to the intermediate cylinder 223, and is set equal to a difference D3 - D1 between a distance D3 from the tip (lower end) of the third pipetting nozzle 101 to the tip (lower end) of the third mounting member 103 and a distance D1 illustrated in FIG. 2 (a). As a result, the camera 20 can be mounted on the pipetting arm without changing the distance and angle between the nozzle tip and the camera 20 even for three types of pipetting arms having different lengths of the pipetting nozzles.

Note that the number of cylinders constituting the expansion/contraction part 22 is not limited to three. By setting the pressurization in multiple stages as well, the length of the expansion/contraction part 22 can be adjusted in multiple stages, and even in an automatic analysis apparatus including various pipetting mechanisms, the tip positions of the nozzles of all the pipetting mechanisms can be adjusted with a single single-focus camera.

### Third Embodiment

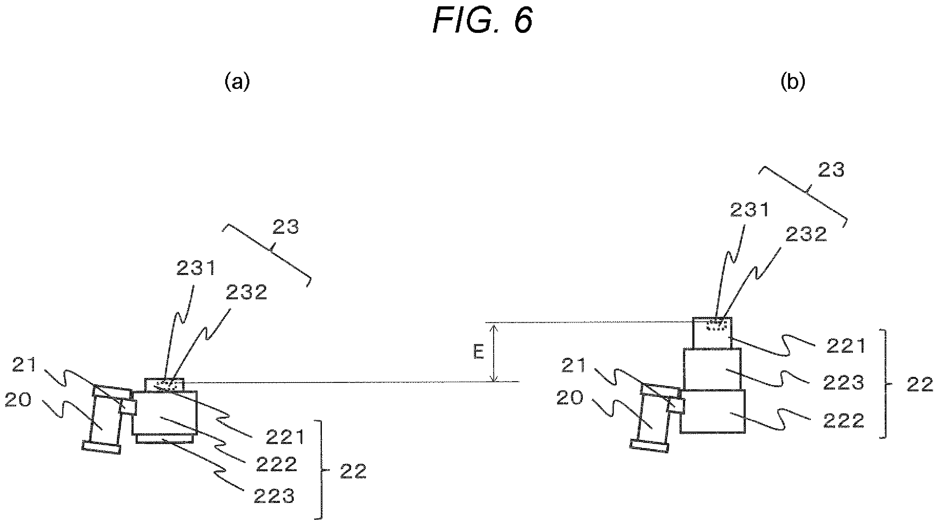

FIG. 6 is a side view of a camera holding device 2 according to a third embodiment, in which (a) illustrates a state where the expansion/contraction part 22 is shortest, and (b) illustrates a state where the expansion/contraction part 22 is longest. A first feature of the present embodiment is that both the first mounting member 143 and the second mounting member 153 are formed of a magnetic material. A second feature of the present embodiment is that, as illustrated in FIG. 6, a magnet 232 for attracting the first mounting member 143 and the second mounting member 153 is provided on the bottom surface of the hole 231 constituting the arm-side fixing part 23.

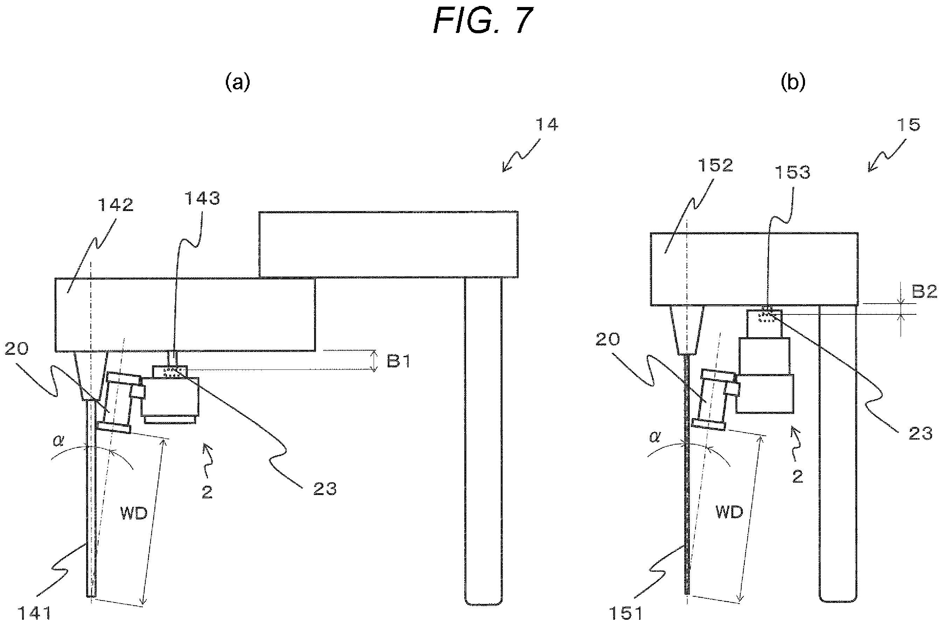

FIG. 7 is a side view illustrating the state of the camera holding device 2 when the camera 20 is mounted on the pipetting arm in the third embodiment, in which (a) illustrates a state when the camera is mounted on the reagent pipetting arm 142, and (b) illustrates a state when the camera is mounted on the specimen pipetting arm 152. As illustrated in FIG. 7, in the present embodiment as well, the camera 20 that captures an image of the tip of the reagent pipetting nozzle 141 is held by the reagent pipetting arm 142 with the expansion/contraction part 22 in the shortest state, and the camera 20 that captures an image of the tip of the specimen pipetting nozzle 151 is held by the specimen pipetting arm 152 with the expansion/contraction part 22 in the longest state. In addition, a distance WD and an angle α between the tip of the reagent pipetting nozzle 141 and the camera 20 in FIG. 7(a) also have the same values as a distance WD and an angle α between the tip of the specimen pipetting nozzle 151 and the camera 20 in FIG. 7(b).

In the present embodiment, the force of the magnet 232 of the arm-side fixing part 23 attracting the first mounting member 143 and the second mounting member 153 is used to facilitate the mounting and detachment work of the camera 20 to and from the pipetting arm.

### Fourth Embodiment

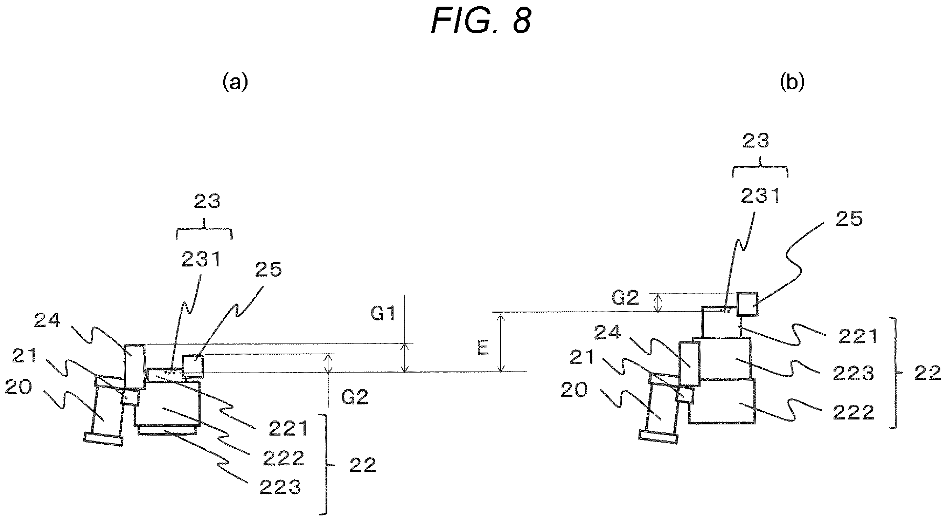

FIG. 8 is a side view of a camera holding device 2 according to a fourth embodiment, in which (a) illustrates a state where the expansion/contraction part 22 is shortest, and (b) illustrates a state where the expansion/contraction part 22 is longest.

A first feature of the present embodiment is that the outermost cylinder 222 is provided with a pair of first extensions 24 extending in the expansion/contraction direction of the expansion/contraction part 22, and the innermost cylinder 221 is provided with a pair of second extensions 25 extending in the expansion/contraction direction of the expansion/contraction part 22.

A second feature of the present embodiment is that a height G1 (see FIG. 8(a)) from the bottom surface of the hole 231 of the arm-side fixing part 23 to the upper end of the first extension 24 is longer than a protrusion amount B1 (see FIG. 2(a)) from the bottom surface of the reagent pipetting arm 142 of the first mounting member 143 and shorter than the expansion/contraction amount E (see FIG. 3) of the expansion/contraction part 22.

A third feature of the present embodiment is that a height G2 (see FIG. 8(b)) from the bottom surface of the hole 231 of the arm-side fixing part 23 to the upper end of the second extension 25 is shorter than protrusion amount B1 described above and longer than the protrusion amount B2 (see FIG. 2(b)) of the second mounting member 153 from the bottom surface of the specimen pipetting arm 152.

A fourth feature of the present embodiment is that the spacing of the pair of first extensions 24 is equal to the width of the reagent pipetting arm 142, and the spacing of the pair of second extensions 25 is equal to the width of the specimen pipetting arm 152.

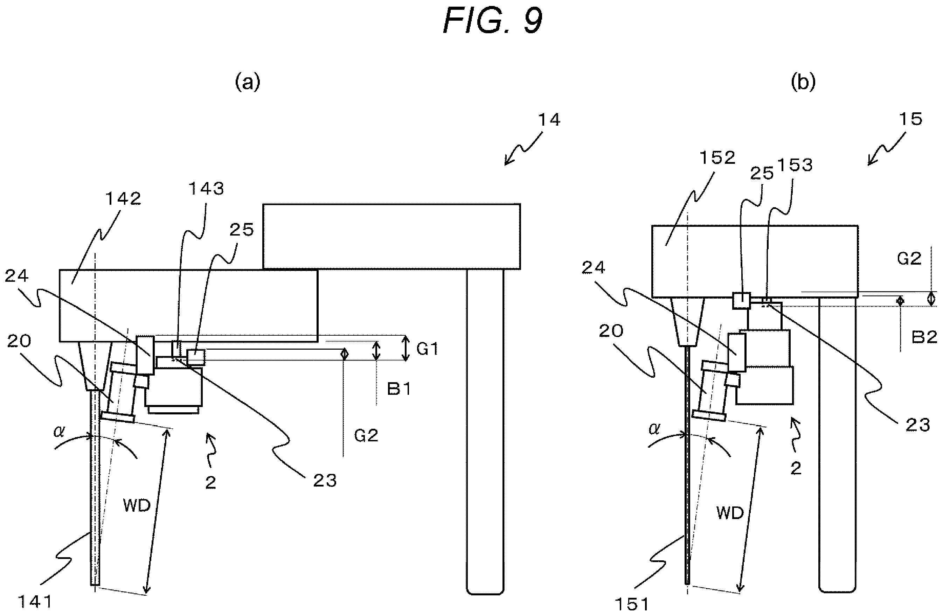

FIG. 9 is a side view illustrating the state of the camera holding device 2 when the camera 20 is mounted on the pipetting arm in the fourth embodiment, in which (a) illustrates a state when the camera is mounted on the reagent pipetting arm 142, and (b) illustrates a state when the camera is mounted on the specimen pipetting arm 152.

As illustrated in FIG. 9(a), when the camera 20 is mounted on the reagent pipetting arm 142 with the expansion/contraction part 22 in the shortest state, the first extension 24 protrudes most upward and faces the side surface of the reagent pipetting arm 142. Here, in the present embodiment, as described above, since the spacing of the pair of first extensions 24 is equal to the width of the reagent pipetting arm 142, the first extensions 24 grip the side surfaces of the reagent pipetting arm 142, which ensures that the camera 20 can be held in position. At this time, a space B1 larger than the G2 described above is ensured between the bottom surface of the hole 231 of the arm-side fixing part 23 and the bottom surface of the reagent pipetting arm 142. Therefore, even when the reagent pipetting arm 142 is wider than the specimen pipetting arm 152, the second extension 25 does not interfere with the reagent pipetting arm 142.

On the other hand, as illustrated in FIG. 9(b), when the camera 20 is mounted on the specimen pipetting arm 152 in a state where the expansion/contraction part 22 is longest, the second extension 25 protrudes most upward and faces the side surface of the specimen pipetting arm 152. Here, in the present embodiment, as described above, since the spacing of the pair of second extensions 25 is equal to the width of the specimen pipetting arm 152, the second extensions 25 grip the side surfaces of the specimen pipetting arm 152, which can ensure that the camera 20 can be held in position. At this time, even when the width of the specimen pipetting arm 152 is wider than the width of the reagent pipetting arm 142, the first extension 24 does not interfere with the specimen pipetting arm 152.

According to the present embodiment, when the camera 20 is mounted on either the reagent pipetting arm 142 or the specimen pipetting arm 152, the first extensions 24 or the second extensions 25 grip the side surfaces of the pipetting arm. This not only improves the positioning accuracy of the camera 20 in the Yaw direction, but can also suppress the displacement and tilting of the camera after mounting caused by the movement of the pipetting arm. In addition, by making the spacing of the pair of first extensions 24 correspond to the shape (width dimension) of the reagent pipetting arm 142 and making the spacing of the pair of second extensions 25 correspond to the shape (width dimension) of the specimen pipetting arm 152, the camera can be held with high accuracy even for pipetting arms of different shapes.

### Fifth Embodiment

The pipetting arm may be provided with a screw hole for fixing an electronic substrate for liquid level detection, a screw hole used for connecting a cord for grounding, and the like in advance. In this manner, when the pipetting arm is provided with an existing screw hole, the mounting member can be fastened using the existing screw hole.

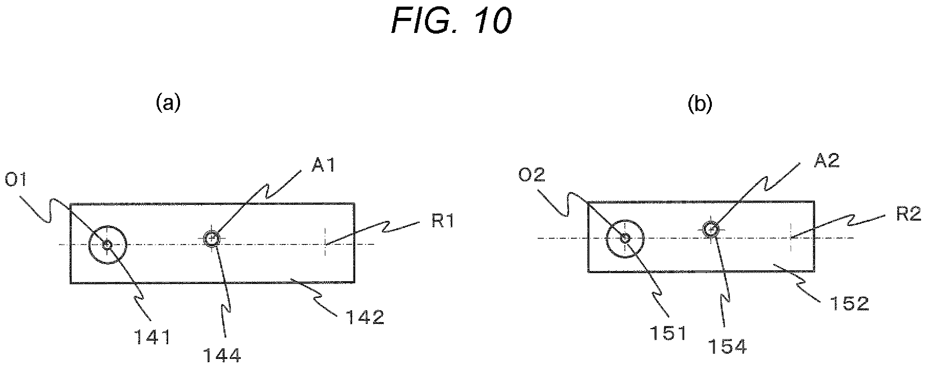

In a fifth embodiment, the mounting member described above is fixed using an existing screw hole provided in the bottom surface of the pipetting arm. FIG. 10 is a plan view illustrating the bottom surface of the pipetting arm in the fifth embodiment, in which (a) illustrates the position of a screw hole 144 provided in the bottom surface of the reagent pipetting arm 142, and (b) illustrates the position of a screw hole 154 provided in the bottom surface of the specimen pipetting arm 152.

In FIG. 10(a), O1 is the intersection point between the central axis of the reagent pipetting nozzle 141 and the bottom surface of the reagent pipetting arm 142, A1 is the intersection point between the central axis of the existing screw hole 144 and the bottom surface of the reagent pipetting arm 142, and R1 is the intersection point between the rotational axis of the reagent pipetting arm 142 and the bottom surface of the reagent pipetting arm 142. Note that the screw hole 144 forms a "female screw", and is fastened with a "male screw" provided at the upper end of the first mounting member 143.

Similarly, in FIG. 10 (b), O2 is the intersection point between the central axis of the specimen pipetting nozzle 151 and the bottom surface of the specimen pipetting arm 152, A2 is the intersection point between the central axis of the existing screw hole 154 and the bottom surface of the specimen pipetting arm 152, and R2 is the intersection point between the rotational axis of the specimen pipetting arm 152 and the bottom surface of the specimen pipetting arm 152. Note that the screw hole 154 forms a "female screw", and is fastened with a "male screw" provided at the upper end of the second mounting member 153.

As can be seen from a comparison between (a) and (b) in FIG. 10, the positional relationship of A1 with respect to O1 may differ from the positional relationship of A2 with respect to O2. In this case, the positional relationship of the screw hole 144 (first mounting member 143) in the reagent pipetting arm 142 with respect to the reagent pipetting nozzle 141 differs from the positional relationship of the screw hole 154 (second mounting member 153) in the specimen pipetting arm 152 with respect to the specimen pipetting nozzle 151. Thus, if the central axis of the expansion/contraction part 22 of the camera holding device 2 described above coincides with the central axes of these screw holes (mounting members), the distance and angle from the tip of the pipetting nozzle to the camera 20 differ between the reagent pipetting nozzle and the specimen pipetting nozzle.

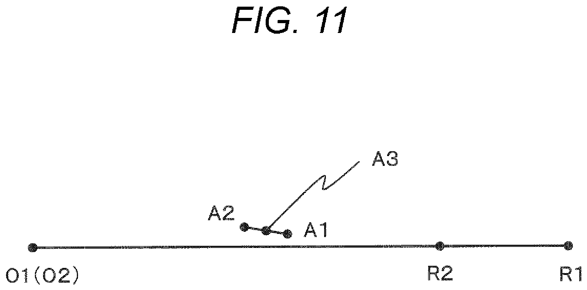

Therefore, in the camera holding device 2 according to the present embodiment, the hole 231 of the arm-side fixing part 23 is provided at a position eccentric from the central axis (A3) of the expansion/contraction part 22. FIG. 11 is a view illustrating the relative position of the central axis (A3) of the expansion/contraction part 22 with respect to the screw hole 144 (A1) of the reagent pipetting arm 142 and the screw hole 154 (A2) of the specimen pipetting arm 152. Specifically, the positions of A1 and A2 are illustrated in a state where O1 and O2 in FIG. 10 coincide with each other and a line segment O1-R1 and a line segment O2-R2 overlap on the same straight line. As illustrated in FIG. 11, in the present embodiment, the central axis (A3) of the expansion/contraction part 22 is positioned vertically downward passing through the midpoint of a line segment A1-A2.

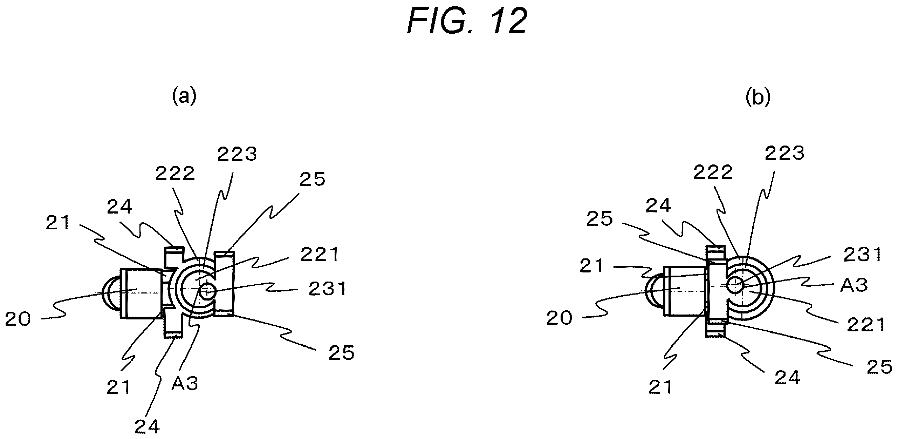

FIG. 12 is a plan view of the camera holding device 2 according to the fifth embodiment as viewed from above, in which (a) illustrates a state where the expansion/contraction part 22 is shortest, and (b) illustrates a state where the expansion/contraction part 22 is longest. The innermost cylinder 221 is relatively displaced in the axial direction while relatively rotating with respect to the outermost cylinder 222, so that the hole 231 at the position eccentric from the central axis (A3) of the expansion/contraction part 22 is displaced in the circumferential direction by the expansion/contraction amount of the expansion/contraction part 22. In the state where the expansion/contraction part 22 is shortest, as illustrated in FIG. 12(a), the positional relationship of the hole 231 with respect to the central axis (A3) of the expansion/contraction part is the positional relationship A1 with respect to A3 in FIG. 11. In the state where the expansion/contraction part 22 is longest, as illustrated in FIG. 12(b), the positional relationship of the hole 231 with respect to the central axis (A3) of the expansion/contraction part is the positional relationship of A2 with respect to A3 of FIG. 11.

Therefore, even when the position of the existing screw hole of the reagent pipetting arm 142 relatively differs from the position of the existing screw hole of the specimen pipetting arm 152, the camera holding device 2 can be mounted on each pipetting arm such that the positional relationship of the central axis of the expansion/contraction part 22 with respect to each pipetting nozzle stays unchanged. In the present embodiment, the groove is formed in the intermediate cylinder 223 such that the innermost cylinder 221 rotates 180 degrees with respect to the outermost cylinder 222 as the expansion/contraction part 22 extends from the shortest state to the longest state. However, the angle of rotation from the shortest to the longest is not limited to 180 degrees.

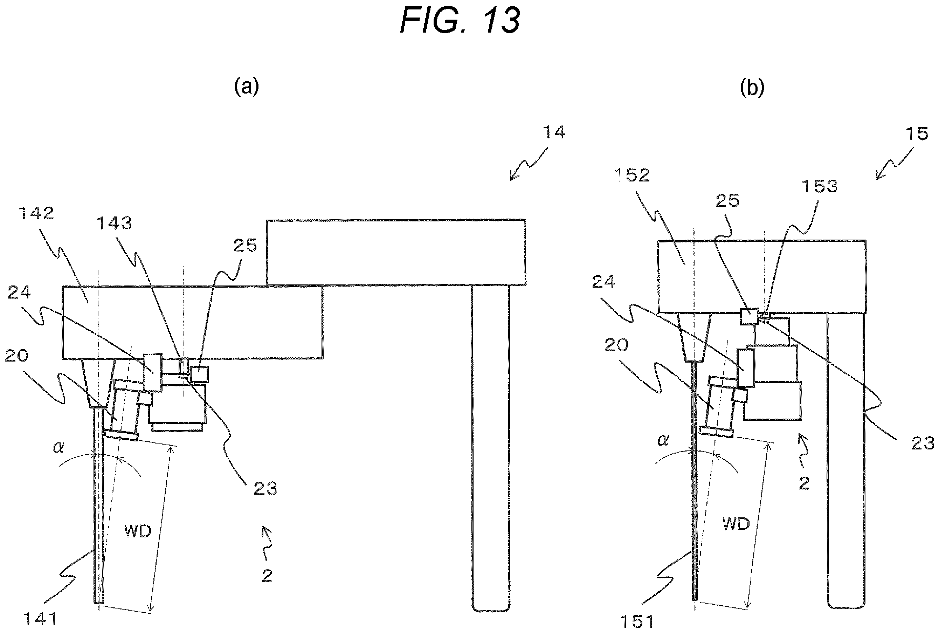

FIG. 13 is a side view illustrating the state of the camera holding device 2 when the camera 20 is mounted on the pipetting arm in the fifth embodiment, in which (a) illustrates a state when the camera is mounted on the reagent pipetting arm 142, and (b) illustrates a state when the camera is mounted on the specimen pipetting arm 152. As illustrated in FIG. 13, since there is no change in the position of the camera 20 fixed to the outermost cylinder 222 with respect to the tip of each pipetting nozzle, the focus, composition, angle, and pixel resolution with respect to the nozzle of the camera 20 stay unchanged.

In the present embodiment, since the existing screw hole is used, it is possible to mount the camera on the existing automatic analysis apparatus without performing new processing. Further, the hole 231 and the magnet 232 constituting the arm-side fixing part 23 need only be common to both pipetting arms, thereby enabling reduction in the weight of the camera holding device and the manufacturing cost.

The above embodiments have been described in detail for the purpose of describing the present invention in an easy-to-understand manner and are not necessarily limited to those having all the configurations described above. It is also possible to replace a part of the configuration of one embodiment with the configuration of another embodiment or to add the configuration of another embodiment to the configuration of one embodiment. It is also possible to add, delete, or replace a part of the configuration of each embodiment with another configuration.

### Reference Signs List

- 1: automatic analysis apparatus
- 2: camera holding device
- 10: third pipetting mechanism
- 11: reagent container
- 12: reagent disk
- 13: reaction disk
- 14: reagent pipetting mechanism
- 15: specimen pipetting mechanism
- 16: conveyance line
- 17: cleaning tank
- 18: specimen container
- 19: rack
- 20: camera
- 21: camera-side fixing part
- 22: expansion/contraction part
- 23: arm-side fixing part
- 24: first extension
- 25: second extension
- 101: third pipetting nozzle
- 102: third pipetting arm
- 103: third mounting member
- 131: reaction cell
- 141: reagent pipetting nozzle
- 142: reagent pipetting arm
- 143: first mounting member
- 144: screw hole
- 151: specimen pipetting nozzle
- 152: specimen pipetting arm
- 153: second mounting member
- 154: screw hole
- 221: innermost cylinder
- 222: outermost cylinder
- 223: intermediate cylinder
- 231: hole
- 232: magnet

## Claims

1. A camera holding device (2) for an automatic analysis apparatus (1), the camera holding device (2) holding a camera (20) to capture an image of a tip of a pipetting nozzle (101,141,151) of the automatic analysis apparatus (1) on a pipetting arm (102, 142, 152) that moves the pipetting nozzle (101, 141, 151) through rotational movement, the camera holding device (2) being **characterised by** comprising:
an expansion/contraction part (22) that expands and contracts in a vertical direction with respect to the pipetting arm;
an arm-side fixing part (23) that fixes one end of the expansion/contraction part (22) to the pipetting arm (102,142,152); and
a camera-side fixing part (21) that fixes the camera (20) to another end of the expansion/contraction part (22).

2. The camera holding device (2) for an automatic analysis apparatus (1) according to claim 1, wherein the automatic analysis apparatus (1) includes
a first pipetting arm (142) that rotates a first pipetting nozzle (141),
a second pipetting arm (152) that moves a second pipetting nozzle (151) longer than the first pipetting nozzle (141) through rotational movement,
a first mounting member (143) that protrudes downward from a bottom surface of the first pipetting arm (142), and
a second mounting member (153) that protrudes downward from a bottom surface of the second pipetting arm (152),
the arm-side fixing part (23) includes a hole (231) to be fitted over the first mounting member (143) and the second mounting member (153),
a difference between a height from a tip of the second pipetting nozzle (151) to a tip of the second mounting member (153) and
a height from a tip of the first pipetting nozzle (141) to a tip of the first mounting member (143) is an expansion/contraction amount of the expansion/contraction part (22),
a camera (20) that captures an image of the first pipetting nozzle (141) is held by the first pipetting arm (142) in a state where the expansion/contraction part (22) is most contracted, and
a camera (20) that captures an image of the second pipetting nozzle (151) is held by the second pipetting arm (152) in a state where the expansion/contraction part (22) is most expanded.

3. The camera holding device (2) for an automatic analysis apparatus (1) according to claim 2, wherein the expansion/contraction part (22) includes a plurality of cylinders (221, 222, 223) having different diameters, the arm-side fixing part (23) is provided on an upper surface of an innermost cylinder (221), and the camera-side fixing part (21) is provided on a side surface of an outermost cylinder (222).

4. The camera holding device (2) for an automatic analysis apparatus (1) according to claim 3, wherein a magnet (232) that attracts the first mounting member (143) and the second mounting member (153) formed using a magnetic material is provided on a bottom surface of the hole (231) of the arm-side fixing part (23).

5. The camera holding device (2) for an automatic analysis apparatus (1) according to claim 3, wherein
a positional relationship of the first mounting member (143) with respect to the first pipetting nozzle (141) in the first pipetting arm (142) differs from a positional relationship of the second mounting member (153) with respect to the second pipetting nozzle (151) in the second pipetting arm (152),
the innermost cylinder (221) is relatively displaced in an axial direction while relatively rotating with respect to the outermost cylinder (222), and
the arm-side fixing part (23) is provided at a position eccentric from a central axis of the expansion/contraction part (22), and the expansion/contraction part (22) is at a position circumferentially different between a most contracted state and a most expanded state.

6. The camera holding device (2) for an automatic analysis apparatus (1) according to claim 5, wherein male screws are provided at upper ends of the first mounting member (143) and the second mounting member (153), and the first mounting member (143) and the second mounting member (153) are fastened to female screws provided on bottom surfaces of the first pipetting arm (142) and the second pipetting arm (152).

7. The camera holding device (2) for an automatic analysis apparatus (1) according to claim 3, wherein
the outermost cylinder (222) includes a pair of first extensions (24) extending in an expansion/contraction direction of the expansion/contraction part (22),
the innermost cylinder (221) includes a pair of second extensions (25) extending in the expansion/contraction direction of the expansion/contraction part (22),
a height from a bottom surface of the hole of the arm-side fixing part (23) to an upper end of the first extension (24) is longer than a protrusion amount of the first mounting member (143) from a bottom surface of the first pipetting arm (142) and is shorter than an expansion/contraction amount of the expansion/contraction part (22),
a height from the bottom surface of the hole (231) of the arm-side fixing part (23) to an upper end of the second extension (25) is shorter than the protrusion amount of the first mounting member (143) from the bottom surface of the first pipetting arm (142) and longer than a protrusion amount of the second mounting member (153) from a bottom surface of the second pipetting arm (152),
in a state where the expansion/contraction part (22) is most contracted, the first extensions (24) protrude the most upward and grip side surfaces of the first pipetting arm (142), and
in a state where the expansion/contraction part (22) is most expanded, the second extensions (25) protrude most upward and grip side surfaces of the second pipetting arm (152).

8. The camera holding device (2) for an automatic analysis apparatus (1) according to claim 3, wherein
the automatic analysis apparatus (1) includes a third pipetting arm (102) that moves a third pipetting nozzle (101) longer than the first pipetting nozzle (141) and shorter than the second pipetting nozzle (151) through rotational movement, and a third mounting member (103) protruding downward from a bottom surface of the third pipetting arm (102),
the expansion/contraction part (22) includes the innermost cylinder (221), the outermost cylinder (222), and an intermediate cylinder (223) disposed between the innermost cylinder (221) and the outermost cylinder (222), and pressure between the intermediate cylinder (223) and the innermost cylinder (221) is smaller than pressure between the intermediate cylinder (223) and the outermost cylinder (222), and
the camera (20) that captures an image of the third pipetting nozzle (101) is held by the third pipetting arm (102) by fitting the hole (231) of the arm-side fixing part (23) to the third mounting member . (103) in a state where only the innermost cylinder (221) is most expanded.

## Patentansprüche

1. Kamerahaltevorrichtung (2) für ein automatisches Analysegerät (1), wobei die Kamerahaltevorrichtung (2) eine Kamera (20) hält, um ein Bild einer Spitze einer Pipettierdüse (101, 141, 151) des automatischen Analysegeräts (1) an einem Pipettierarm (102, 142, 152) aufzunehmen, der die Pipettierdüse (101, 141, 151) durch Drehbewegung bewegt, wobei die Kamerahaltevorrichtung (2) **dadurch gekennzeichnet ist, dass** sie umfasst:
ein Expansions-/Kontraktionsteil (22), das in einer vertikalen Richtung in Bezug auf den Pipettierarm expandiert und kontrahiert;
ein armseitiges Befestigungsteil (23), das ein Ende des Expansions-/Kontraktionsteils (22) an dem Pipettierarm (102, 142, 152) befestigt; und
ein kameraseitiges Befestigungsteil (21), das die Kamera (20) an einem anderen Ende des Expansions-/Kontraktionsteils (22) befestigt.

2. Kamerahaltevorrichtung (2) für ein automatisches Analysegerät (1) nach Anspruch 1, wobei das automatische Analysegerät (1) enthält:
einen ersten Pipettierarm (142), der eine erste Pipettierdüse (141) dreht,
einen zweiten Pipettierarm (152), der eine zweite Pipettierdüse (151), die länger als die erste Pipettierdüse (141) ist, durch Drehbewegung bewegt,
ein erstes Montageelement (143), das von einer unteren Fläche des ersten Pipettierarms (142) nach unten vorsteht, und
ein zweites Montageelement (153), das von einer unteren Fläche des zweiten Pipettierarms (152) nach unten vorsteht,
wobei das armseitige Befestigungsteil (23) eine Öffnung (231) umfasst, die über das erste Montageelement (143) und das zweite Montageelement (153) gepasst werden soll,
wobei eine Differenz zwischen einer Höhe von einer Spitze der zweiten Pipettierdüse (151) zu einer Spitze des zweiten Montageelements (153) und einer Höhe von einer Spitze der ersten Pipettierdüse (141) zu einer Spitze des ersten Montageelements (143) ein Expansions-/Kontraktionsbetrag des Expansions-/Kontraktionsteils (22) ist,
wobei eine Kamera (20), die ein Bild der ersten Pipettierdüse (141) aufnimmt, vom ersten Pipettierarm (142) in einem Zustand gehalten wird, in dem das Expansions-/Kontraktionsteil (22) am meisten kontrahiert ist, und
wobei eine Kamera (20), die ein Bild der zweiten Pipettierdüse (151) aufnimmt, von dem zweiten Pipettierarm (152) in einem Zustand gehalten wird, in dem das Expansions-/Kontraktionsteil (22) am meisten expandiert ist.

3. Kamerahaltevorrichtung (2) für ein automatisches Analysegerät (1) nach Anspruch 2, wobei das Expansions-/Kontraktionsteil (22) mehrere Zylinder (221, 222, 223) mit unterschiedlichen Durchmessern enthält, wobei das armseitige Befestigungsteil (23) auf einer oberen Fläche eines innersten Zylinders (221) vorgesehen ist und wobei das kameraseitige Befestigungsteil (21) auf einer Seitenfläche eines äußersten Zylinders (222) vorgesehen ist.

4. Kamerahaltevorrichtung (2) für ein automatisches Analysegerät (1) nach Anspruch 3, wobei ein Magnet (232), der das erste Montageelement (143) und das zweite Montageelement (153), die unter Verwendung eines magnetischen Materials gebildet sind, anzieht, auf einer unteren Fläche der Öffnung (231) des armseitigen Befestigungsteils (23) vorgesehen ist.

5. Kamerahaltevorrichtung (2) für ein automatisches Analysegerät (1) nach Anspruch 3,
wobei eine Positionsbeziehung des ersten Montageelements (143) in Bezug auf die erste Pipettierdüse (141) im ersten Pipettierarm (142) von einer Positionsbeziehung des zweiten Montageelements (153) in Bezug auf die zweite Pipettierdüse (151) im zweiten Pipettierarm (152) verschieden ist,
wobei der innerste Zylinder (221) in einer axialen Richtung relativ verschoben wird, während er sich relativ zum äußersten Zylinder (222) dreht, und
wobei das armseitige Befestigungs-teil (23) an einer Position exzentrisch bezüglich einer Mittelachse des Expansions-/Kontraktionsteils (22) vorgesehen ist, und wobei sich das Expansions-/Kontraktionsteil (22) an einer Position befindet, die sich zwischen einem am meisten kontrahierten Zustand und einem am meisten expandierten Zustand umfangsmäßig unterscheidet.

6. Kamerahaltevorrichtung (2) für ein automatisches Analysegerät (1) nach Anspruch 5, wobei Außengewinde an oberen Enden des ersten Montageelements (143) und des zweiten Montageelements (153) vorgesehen sind, und wobei das erste Montageelement (143) und das zweite Montageelement (153) an Innengewinden befestigt sind, die an unteren Flächen des ersten Pipettierarms (142) und des zweiten Pipettierarms (152) vorgesehen sind.

7. Kamerahaltevorrichtung (2) für ein automatisches Analysegerät (1) nach Anspruch 3,
wobei der äußerste Zylinder (222) ein Paar von ersten Fortsätzen (24) umfasst, die sich in einer Expansions-/Kontraktionsrichtung des Expansions-/Kontraktionsteils (22) erstrecken,
wobei der innerste Zylinder (221) ein Paar von zweiten Fortsätzen (25) umfasst, die sich in der Expansions-/Kontraktionsrichtung des Expansions-/Kontraktionsteils (22) erstrecken,
wobei eine Höhe von einer unteren Fläche der Öffnung des armseitigen Befestigungsteils (23) zu einem oberen Ende des ersten Fortsatzes (24) länger ist als ein Vorstehmaß des ersten Montageelements (143) von einer unteren Fläche des ersten Pipettierarms (142) und kürzer ist als ein Expansions- /Kontraktionsmaß des Expansions-/Kontraktionsteils (22),
wobei eine Höhe von der unteren Fläche der Öffnung (231) des armseitigen Befestigungsteils (23) zu einem oberen Ende des zweiten Fortsatzes (25) kürzer ist als das Vorstehmaß des ersten Montageelements (143) von der unteren Fläche des ersten Pipettierarms (142) und länger ist als ein Vorstehmaß des zweiten Montageelements (153) von einer unteren Fläche des zweiten Pipettierarms (152),
wobei in einem Zustand, in dem das Expansions-/Kontraktionsteil (22) am meisten kontrahiert ist, die ersten Fortsätze (24) am meisten nach oben vorstehen und Seitenflächen des ersten Pipettierarms (142) greifen, und
wobei in einem Zustand, in dem das Expansions-/Kontraktionsteil (22) am meisten expandiert ist, die zweiten Fortsätze (25) am meisten nach oben vorstehen und Seitenflächen des zweiten Pipettierarms (152) greifen.

8. Kamerahaltevorrichtung (2) für ein automatisches Analysegerät (1) nach Anspruch 3,
wobei das automatische Analysegerät (1) einen dritten Pipettierarm (102), der eine dritte Pipettierdüse (101), die länger als die erste Pipettierdüse (141) und kürzer als die zweite Pipettierdüse (151) ist, durch Drehbewegung bewegt, und ein drittes Montageelement (103), das von einer unteren Fläche des dritten Pipettierarms (102) nach unten vorsteht, enthält,
wobei das Expansions-/Kontraktionsteil (22) den innersten Zylinder (221), den äußersten Zylinder (222) und einen Zwischenzylinder (223), der zwischen dem innersten Zylinder (221) und dem äußersten Zylinder (222) angeordnet ist, enthält und der Druck zwischen dem Zwischenzylinder (223) und dem innersten Zylinder (221) kleiner ist als der Druck zwischen dem Zwischenzylinder (223) und dem äußersten Zylinder (222), und
wobei die Kamera (20), die ein Bild der dritten Pipettierdüse (101) aufnimmt, vom dritten Pipettierarm (102) gehalten wird, indem die Öffnung (231) des armseitigen Befestigungsteils (23) an das dritte Montageelement (103) in einem Zustand gepasst wird, in dem nur der innerste Zylinder (221) am meisten expandiert ist.

## Revendications

1. Dispositif (2) de maintien de caméra pour un appareil (1) d'analyse automatique, le dispositif (2) de maintien de caméra maintenant une caméra (20) pour capturer une image d'un embout d'une buse (101, 141, 151) de pipetage de l'appareil (1) d'analyse automatique sur un bras (102, 142, 152) de pipetage qui déplace la buse (101, 141, 151) de pipetage selon un mouvement rotatif, le dispositif (2) de maintien de caméra étant **caractérisé en ce que** comprenant :
une partie (22) d'extension/retrait qui s'étend et se rétracte dans un sens vertical par rapport au bras de pipetage ;
une partie (23) de fixation de côté bras qui fixe une extrémité de la partie (22) d'extension/retrait sur le bras (102, 142, 152) de pipetage ; et
une partie (21) de fixation de côté caméra qui fixe la caméra (20) sur une autre extrémité de la partie (22) d'extension/retrait.

2. Dispositif (2) de maintien de caméra pour un appareil (1) d'analyse automatique selon la revendication 1, dans lequel
l'appareil (1) d'analyse automatique inclut
un premier bras (142) de pipetage qui fait tourner une première buse (141) de pipetage,
un deuxième bras (152) de pipetage qui déplace une deuxième buse (151) de pipetage plus longue que la première buse (141) de pipetage selon un mouvement rotatif,
un premier élément (143) de montage qui fait saillie vers le bas depuis une surface de fond du premier bras (142) de pipetage, et
un deuxième élément (153) de montage qui fait saillie vers le bas depuis une surface de fond du deuxième bras (152) de pipetage,
la partie (23) de fixation de côté bras inclut un trou (231) destiné à être ajusté par-dessus le premier élément (143) de montage et le deuxième élément (153) de montage,
une différence entre une hauteur d'un embout de la deuxième buse (151) de pipetage à un embout du deuxième élément (153) de montage et une hauteur d'un embout de la première buse (141) de pipetage à un embout du premier élément (143) de montage est une quantité d'extension/retrait de la partie (22) d'extension/retrait,
une caméra (20) qui capture une image de la première buse (141) de pipetage est maintenue par le premier bras (142) de pipetage dans un état où la partie (22) d'extension/retrait est la plus rétractée, et
une caméra (20) qui capture une image de la deuxième buse (151) de pipetage est maintenue par le deuxième bras (152) de pipetage dans un état où la partie (22) d'extension/retrait est la plus étendue.

3. Dispositif (2) de maintien de caméra pour un appareil (1) d'analyse automatique selon la revendication 2, dans lequel la partie (22) d'extension/retrait inclut une pluralité de cylindres (221, 222, 223) ayant des diamètres différents, la partie (23) de fixation de côté bras est prévue sur une surface supérieure d'un cylindre le plus intérieur (221), et la partie (21) de fixation de côté caméra est prévue sur une surface latérale d'un cylindre le plus extérieur (222).

4. Dispositif (2) de maintien de caméra pour un appareil (1) d'analyse automatique selon la revendication 3, dans lequel un aimant (232) qui attire le premier élément (143) de montage et le deuxième élément (153) de montage formé en utilisant un matériau magnétique est prévu sur une surface de fond du trou (231) de la partie (23) de fixation de côté bras.

5. Dispositif (2) de maintien de caméra pour un appareil (1) d'analyse automatique selon la revendication 3, dans lequel
une relation positionnelle du premier élément (143) de montage par rapport à la première buse (141) de pipetage dans le premier bras (142) de pipetage diffère d'une relation positionnelle du deuxième élément (153) de montage par rapport à la deuxième buse (151) de pipetage dans le deuxième bras (152) de pipetage,
le cylindre le plus intérieur (221) est déplacé relativement dans un sens axial tout en tournant relativement par rapport au cylindre le plus extérieur (222), et
la partie (23) de fixation de côté bras est prévue à une position excentrique par rapport à un axe central de la partie (22) d'extension/retrait, et la partie (22) d'extension/retrait est à une position circonférentiellement différente entre un état le plus rétracté et un état le plus étendu.

6. Dispositif (2) de maintien de caméra pour un appareil (1) d'analyse automatique selon la revendication 5, dans lequel des vis mâles sont prévues à des extrémités supérieures du premier élément (143) de montage et du deuxième élément (153) de montage, et le premier élément (143) de montage et le deuxième élément (153) de montage sont fixés à des vis femelles prévues sur des surfaces de fond du premier bras (142) de pipetage et du deuxième bras (152) de pipetage.

7. Dispositif (2) de maintien de caméra pour un appareil (1) d'analyse automatique selon la revendication 3, dans lequel
le cylindre le plus extérieur (222) inclut une paire de premières extensions (24) s'étendant dans un sens d'extension/retrait de la partie (22) d'extension/retrait,
le cylindre le plus intérieur (221) inclut une paire de deuxièmes extensions (25) s'étendant dans le sens d'extension/retrait de la partie (22) d'extension/retrait,
une hauteur depuis une surface de fond du trou de la partie (23) de fixation de côté bras jusqu'à une extrémité supérieure de la première extension (24) est plus longue qu'une quantité de saillie du premier élément (143) de montage depuis une surface de fond du premier bras (142) de pipetage et est plus courte qu'une quantité d'extension/retrait de la partie (22) d'extension/retrait,
une hauteur depuis la surface de fond du trou (231) de la partie (23) de fixation de côté bras jusqu'à une extrémité supérieure de la deuxième extension (25) est plus courte que la quantité de saillie du premier élément (143) de montage depuis la surface de fond du premier bras (142) de pipetage et plus longue qu'une quantité de saillie du deuxième élément (153) de montage depuis une surface de fond du deuxième bras (152) de pipetage,
dans un état où la partie (22) d'extension/retrait est la plus rétractée, les premières extensions (24) font saillie le plus vers le haut et agrippent des surfaces latérales du premier bras (142) de pipetage, et
dans un état où la partie (22) d'extension/retrait est la plus étendue, les deuxièmes extensions (25) font saillie le plus vers le haut et agrippent des surfaces latérales du deuxième bras (152) de pipetage.

8. Dispositif (2) de maintien de caméra pour un appareil (1) d'analyse automatique selon la revendication 3, dans lequel
l'appareil (1) d'analyse automatique inclut un troisième bras (102) de pipetage qui déplace une troisième buse (101) de pipetage plus longue que la première buse (141) de pipetage et plus courte que la deuxième buse (151) de pipetage selon un mouvement rotatif, et un troisième élément (103) de montage faisant saillie vers le bas depuis une surface de fond du troisième bras (102) de pipetage,
la partie (22) d'extension/retrait inclut le cylindre le plus intérieur (221), le cylindre le plus extérieur (222) et un cylindre intermédiaire (223) disposé entre le cylindre le plus intérieur (221) et le cylindre le plus extérieur (222), et une pression entre le cylindre intermédiaire (223) et le cylindre le plus intérieur (221) est plus petite qu'une pression entre le cylindre intermédiaire (223) et le cylindre le plus extérieur (222), et
la caméra (20) qui capture une image de la troisième buse (101) de pipetage est maintenue par le troisième bras (102) de pipetage en ajustant le trou (231) de la partie (23) de fixation de côté bras sur le troisième élément (103) de montage dans un état où seul le cylindre le plus intérieur (221) est le plus étendu.
